# EUROPÄISCHE PATENTANMELDUNG

(11) **EP 0 978 692 A2**
(43) Veröffentlichungstag der Anmeldung: **09.02.2000**
(21) Anmeldenummer: 99115033.5
(22) Anmeldetag: 03.08.1999
(51) Int. Cl.: F24H 9/20

(54) **Überwachungs- und Bedienungseinrichtung für Heizungsanlagen**

(30) Priorität: 07.08.1998 DE 19835920
(71) Anmelder: Viessmann Werke GmbH & Co, 35107 Allendorf (Eder) (DE)
(72) Erfinder: Paxian, Franz, 35099 Burgwald (DE)
(74) Vertreter: Beetz & Partner Patentanwälte

(57) **Zusammenfassung**

Die Erfindung betrifft eine Überwachungs- und Bedienungseinrichtung für Heizungsanlagen mit mindestens einer in einem Bedienfeld (1) angeordneten Anzeigeeinrichtung (2), die zur Klartextanzeige von Betriebs- und/oder Einstellparametern der Heizüngsanlage mindestens eine Textzeile (3) enthält. Zur einfachen Spracheinstellung für die Textdarstellung in der Anzeigeeinrichtung ist im Bedienfeld (1) erfindungsgemäß mindestens ein Bedienelement (18) zur Anzeige der für eine Spracheinstellung der Klartextanzeige auswählbaren Sprachen in ihrer jeweiligen Landessprache und zur Einstellung von einer der Sprachen als Anzeigesprache für die Klartextanzeige angeordnet.

## Beschreibung

Die Erfindung betrifft eine Überwachungs- und Bedienungseinrichtung für Heizungsanlagen mit mindestens einer in einem Bedienfeld angeordneten Anzeigeeinrichtung, die mindestens eine Textzeile zur Klartextanzeige von Betriebs- und/oder Einstellparametern der Heizungsanlage enthält.

Überwachungs- und Bedienungseinrichtungen für moderne Heizungsanlagen sind vielfach mit Anzeigeeinrichtungen ausgestattet, die nicht nur zur Darstellung von Einstell- oder aktuellen Betriebszustandswerten, sondern auch zur Anzeige von Texten, z.B. für eine Bedienerführung, geeignet sind. Neben den eigentlichen Werten können somit auch die jeweiligen Größen in einer Textdarstellung angezeigt werden, wodurch die Bedienung und überwachung der Heizungsanlage vereinfacht wird. Da die Heizungsanlagen üblicherweise in unterschiedliche Länder geliefert werden, müssen für die Textdarstellung in der Anzeigeeinrichtung verschiedene Sprachvarianten vorgesehen werden. Diese können z.B. in einer geeigneten Speichereinrichtung abgelegt und bei Bedarf abgerufen und eingestellt werden. Eine derartige Spracheinstellung wird entweder direkt durch den Hersteller vorgenommen oder kann durch den Bediener über eine in der Regel aufwendige und ggf. durch eine Bedienerführungsanzeige unterstütze Einstellung erfolgen. Falls jedoch vom Hersteller eine für den Bediener nicht ohne weiteres verständliche Sprache eingestellt ist oder der Bediener bei der Einstellung aus Versehen eine falsche Auswahl vornimmt, ist es oftmals schwer, die tatsächlich gewünschte Spracheinstellung anhand der Bedienerführung durchzuführen, da diese dann u.U. in einer vom Bediener nicht beherrschten Sprache erfolgt. Wenn z.B. der Bediener irrtümlich russisch als Sprache für die Textdarstellung auswählt und eine Bedienerführung dann in kyrillischer Schrift erfolgt, ist es für den diese Sprache nicht beherrschenden Bediener nahezu unmöglich mit Hilfe der Bedienerführung zur richtigen Sprachauswahl zu gelangen.

Aufgabe der Erfindung ist es, eine Überwachungs- und Bedienungseinrichtung für Heizungsanlagen zu schaffen, die eine einfache Spracheinstellung für die Textdarstellung in einer Anzeigeeinrichtung ermöglicht.

Diese Aufgabe wird erfindungsgemäß dadurch gelöst, daß im Bedienfeld mindestens ein Bedienelement zur Anzeige der für eine Spracheinstellung der Klartextanzeige auswählbaren Sprachen in ihrer jeweiligen Landessprache und zur Einstellung von einer der Sprachen als Anzeigesprache für die Klartextanzeige angeordnet ist.

Zweckmäßige Ausführungsformen der Erfindung sind in den Unteransprüchen angegeben.

Wenn bei der erfindungsgemäßen Überwachungs- und Bedienungseinrichtung eine für den Bediener nicht verständliche oder eine nicht gewünschte Sprache für die Textanzeige der Anzeigeeinrichtung eingestellt ist, können durch Betätigung des z.B. gesondert ausgewiesenen Bedienelements die für eine Textanzeige zur Verfügung stehenden Sprachen abgerufen und in der Anzeigeeinrichtung in der jeweiligen Landessprache angezeigt werden. So können z.B. durch Betätigung des Bedienelements in der Anzeigeeinrichtung die Angaben "DEUTSCH", "FRANCAIS", "ITALIANO", "ENGLISH", "NEDERLANDS", "TÜRKCE" "SVENSKA", "DANSK", "POLSKI", "PYCCKNN", "CESKY", "MAGYAR", "ESPANOL", "SLOVENSKO", "HRVATSKI", "ELLINIKA", "ROMANA" usw. in Klartextanzeige angezeigt werden. Der Bediener kann dann sofort die von ihm gewünschte Sprache erkennen und entsprechend auswählen.

Das Bedienelement für die Anzeige der Sprachen ist zweckmäßigerweise mit einem international verständlichen Symbol oder Piktogramm bezeichnet, das beispielweise ein Fragezeichen oder ein "i" als Hinweis auf eine Bedienerinformation sein kann. Auch ein mit der Bedienung der Heizungsanlage nicht ohne weiteres vertrauter Benutzer kann so auf einfache Weise zu einer gewünschten Spracheinstellung für die Textanzeige einer Anzeigeeinrichtung gelangen, mit der dann z.B. eine weitere Bedienerführung durchgeführt wird.

Das Aufrufen der unterschiedlichen Sprachanzeigen kann in einer zweckmäßigen Ausführung durch mehrfaches Betätigen eines einzelnen Bedienelements erfolgen. Das Bedienelement kann aber auch nur zum Aufrufen von einer der z.B. in einer Speichereinrichtung abgelegten Sprachanzeigen bestimmt sein, wobei dann durch zusätzliche Bedienelemente in Form von Vor- und Rücklauftasten oder dgl. die anderen Sprachen abgerufen und angezeigt werden können. Wenn die gewünschte Sprache gefunden ist, kann die Einstellung durch Betätigung einer gesonderten Bestätigungstaste erfolgen. Es kann auch eine Einstellung vorgesehen werden, bei der z.B. nach Ablauf einer vorgegebenen Zeitdauer die in der Anzeigeeinrichtung aktuell gezeigte Sprache automatisch als Anzeigesprache für die Klartextanzeige festgelegt wird.

In einer besonders einfachen und kostengünstigen Ausführungsform können die jeweiligen Sprachanzeigen z.B. durch mehrfache Betätigung eines einzelnen Bedienelements nacheinander zur Anzeige in einer einzelnen Textzeile einer als Display ausgebildeten Anzeigeeinrichtung aufgerufen werden. Die Anzeigeeinrichtung kann aber auch zur Darstellung mehrerer Textzeilen ausgebildet sein, so daß z.B. durch Betätigung des Bedienelements ein Auswahlmenü mit sämtlichen zur Verfügung stehenden Sprachen angezeigt wird.

Für die Spracheinstellung kann ein gesondertes Bedienelement vorgesehen sein. Der Aufruf der einzelnen Sprachanzeigen kann aber auch im Rahmen einer Betriebzustandsabfrage erfolgen, die z.B. durch Drücken eines als Informationstaste gekennzeichneten Bedienelements eingeleitet wird und in der neben den Sprachvarianten auch weitere Betriebsgrößen wie z.B. Kesseltemperatur, Außentemperatur, Vorlauftemperatur, Rücklauftemperatur und dgl. angezeigt werden können. Dabei können die für die Anzeige zur Verfügung stehenden Sprachen entweder am Beginn des Abfragemodus oder erst am Ende angezeigt werden. Da eine Spracheinstellung in der Regel nicht so oft erforderlich ist , könnte die Sprachanzeige zweckmäßigerweise am Ende der Betriebzustandsabfrage erfolgen.

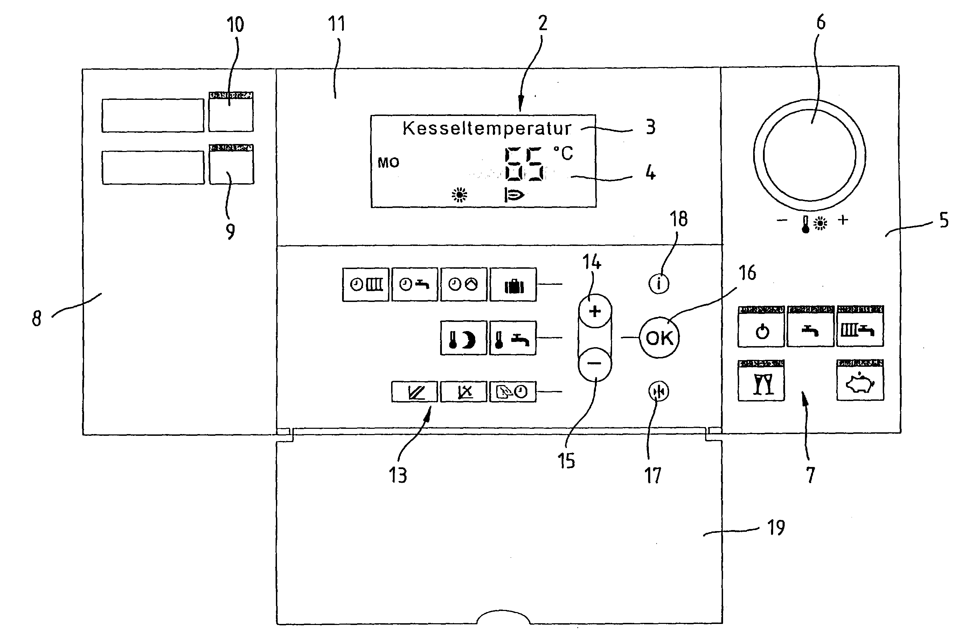

Weitere Besonderheiten und Vorzüge der Erfindung ergeben sich aus der folgenden Beschreibung eines bevorzugten Ausführungsbeispiels anhand der Zeichnung, die schematisch ein Bedienteid einer erfindungsgemäßen Überwachungs- und Bedienungseinrichtung für Heizungsanlagen zeigt.

Das in der Zeichnung dargestellte Bedienfeld 1 ist in vier unterschiedliche Bereiche unterteilt, in denen eine Anzeigeeinrichtung 2 und unterschiedliche Gruppen von Bedien- und Funktionselementen zur Einstellung von Betriebsgrößen und Betriebsprogrammen einer Heizungsanlage angeordnet sind. Die Anzeigeeinrichtung 2 ist in Form eines Displays ausgebildet und enthält eine Textzeile 3 zur Klartextanzeige der Einstell- oder Betriebsgrößen sowie einen Anzeigebereich 4 zur numerischen Darstellung von Einstellwerten und Symbolen.

In dem in der Zeichnung rechten Bereich 5 des Bedienfeldes 1 ist ein Drehknopf 6 zur Einstellung der Tagtemperatur angeordnet. Unterhalb des Drehkopfes 6 sind mehrerer Funktionstasten 7 angeordnet, über die unterschiedliche Betriebsprogramme, wie z.B. ein Sommerbetrieb, ein Winterbetrieb, ein Partybetrieb oder ein Sparbetrieb, eingestellt werden können.

In dem in der Zeichnung linken Bereich 8 der Bedienfeldes 1 befinden sich zwei Funktionstasten 9 und 10, durch die unterschiedliche Wohnungen zur Abfrage bzw. Einstellung der Betriebsgrößen und Betriebsprogramme ausgewählt werden können.

Der zwischen den Bereichen 5 und 8 liegende Teil des Bedienfeldes 1 ist in einen oberen Bereich 11 mit der Anzeigeeinrichtung 2 und in einen unteren Bereich 12 unterteilt, in dem eine Gruppe von Einstelltasten 13 und eine Eingabetastatur mit einer Plus- oder Vorlauftaste 14, einer Minus- oder Rücklauftaste 15, einer Bestätigungstaste 16 und einer Grundeinstellungstaste 17 angeordnet sind. Über die Einstelltasten 13 und die Eingabetastatur sind verschiedene Betriebsparameter der Heizungsanlage wie z.B. die Schaltzeiten für die Heizung, das Warmwasser und eine Zirkulationspumpe, die Nacht- und Warmwassertemperatur, ein Ferienprogramm oder die Neigung und das Niveau einer Heizkennlinie einstellbar. Über der Bestätigungstaste 16 ist im Bedienfeld 1 ein weiteres Bedienelement in Form einer Informationstaste 18 angeordnet. Da die Einstellparameter einer Heizungsanlage in der Regel nicht so oft verändert werden müssen, ist der untere Bereich 13 des Bedienfeldes 1 durch eine Klappe 19 abdeckbar.

Durch Betätigung einer der Einstelltasten 13 kann z.B. die Warmwassertemperatur der Heizungsanlage eingestellt werden, wobei in der Anzeigeeinrichtung 2 neben dem numerischen Einstellwert auch eine zusätzliche Textinformation zur Bedienerführung erscheint. Falls die Textanzeige in einer für den Bediener nicht verständlichen Sprache erfolgt, kann mit Hilfe der Informationstaste 18 ein Spracheinstellmodus gestartet werden, bei dem auch noch weitere für die Textanzeige zur Verfügung stehende Sprachvarianten aus einer Speichereinrichtung abgerufen und in der Anzeigeeinrichtung 2 angezeigt werden. Bei der Betätigung dieser Informationstaste 18 erscheint in der Textzeile 2 der Anzeigeeinrichtung 1 beispielsweise die Angabe "Deutsch". Durch Betätigung der Vorlauftaste 14 oder der Rücklauftaste 15 können dann die anderen Sprachvarianten zur Anzeige in ihrer jeweiligen Landessprache abgerufen werden, so daß in der Textzeile 3 z.B. aufeinanderfolgend die Anzeigen "FRANCAIS", "ITALIANO", "ENGLISH", "NEDERLANDS", "TÜRKCE" usw. dargestellt werden. Wenn in der Textzeile 3 die gewünschte Sprache erscheint, kann der Bediener die Bestätigungstaste 16 drücken, wobei die dann angezeigte Sprache als weitere Anzeigesprache für die Darstellung von Textinformationen gespeichert wird.

Mit Hilfe der Informationstaste 18 können auch noch weitere Betriebszustände der Heizungsanlage, wie z.B. die Vorlauf- und Rücklauftemperatur, die Kesseltemperatur, die Warmwassertemperatur usw. abgefragt werden, wobei die Betriebszustansgrößen in Klartextanzeige mit dem jeweils zugehörigen Wert oder Einstellbereich angezeigt werden. Die Einstellung der Sprache kann im Rahmen einer derartigen Betriebszustandsabfrage direkt entweder am Anfang oder am Ende erfolgen.

## Patentansprüche

1. Bedienungs- und Überwachungseinrichtung für Heizungsanlagen mit mindestens einer in einem Bedienfeld (1) angeordneten Anzeigeeinrichtung (2), die zur Klartextanzeige von Betriebs- und/oder Einstellparametern der Heizungsanlage mindestens eine Textzeile (3) enthält,
dadurch gekennzeichnet,
daß im Bedienfeld (1) mindestens ein Bedienelement (18) zur Anzeige der für eine Spracheinstellung der Klartextanzeige auswählbaren Sprachen in ihrer jeweiligen Landessprache und zur Einstellung von einer der Sprachen als Anzeigesprache für die Klartextanzeige angeordnet ist.

2. Bedienungs- und Überwachungseinrichtung nach Anspruch 1, dadurch gekennzeichnet, daß das Bedienelement (18) mit einem international verständlichen Symbol bezeichnet ist.

3. Überwachungs- und Bedienungseinrichtung nach Anspruch 1 oder 2, dadurch gekennzeichnet, daß das Bedienelement (18) zur Anzeige einer für die Spracheinstellung der Klartextanzeige auswählbaren ersten Sprache ausgebildet ist und daß im Bedienfeld (1) eine Eingabetastatur (14, 15, 16) zur Anzeige und Einstellung der weiteren Sprachen angeordnet ist.

4. Überwachungs- und Bedienungseinrichtung nach Anspruch 3, dadurch gekennzeichnet, daß die Eingabetastatur eine Vorlauftaste (14) und eine Rücklauftaste (15) enthält.

5. Überwachungs- und Bedienungseinrichtung nach einem der Ansprüche 3 oder 4, dadurch gekennzeichnet, daß die Eingabetastatur eine Bestätigungstaste (16) zur Einstellung einer ausgewählten Sprache enthält.

6. Überwachungs- und Bedienungseinrichtung nach einem der Ansprüche 1 bis 5, dadurch gekennzeichnet, daß die Anzeigeeinrichtung (2) ein Display mit einer Textzeile (3) und einem Anzeigebereich (4) zur Darstellung von Symbolen und zur numerischen Anzeige von Betriebszustands- bzw. Einstellwerten ist.

7. Überwachungs- und Bedienungseinrichtung nach einem der Ansprüche 1 bis 5, dadurch gekennzeichnet, daß die Anzeigeeinrichtung (2) zur Anzeige mehrerer Textzeilen ausgebildet ist.

8. Überwachungs- und Bedienungseinrichtung nach einem der Ansprüche 1 bis 7, dadurch gekennzeichnet, daß die für die Spracheinstellung zur Verfügung stehenden Sprachanzeigen aus einer Speichereinrichtung abrufbar sind.
